# EUROPÄISCHE PATENTSCHRIFT

(11) **EP 3 030 927 B1**
(45) Veröffentlichungstag und Bekanntmachung des Hinweises auf die Patenterteilung: **28.08.2019**
(21) Anmeldenummer: 14744469.9
(22) Anmeldetag: 13.06.2014
(51) Int. Cl.: G02B 6/36, G02B 6/02, G02B 6/12

(54) **OPTISCHER KOPPLER FÜR EINE MEHRKERNFASER**
OPTICAL COUPLER FOR A MULTICORE FIBER
COUPLEUR OPTIQUE POUR UNE FIBRE MULTICOEUR

(30) Priorität: 06.08.2013 DE 102013013071
(43) Veröffentlichungstag der Anmeldung: 15.06.2016
(73) Patentinhaber: LEONI Kabel GmbH, 90402 Nürnberg (DE)
(72) Erfinder: BÄRENKLAU, Peggy, 07743 Jena (DE); BREHM, Lothar, 07743 Jena (DE); KUFNER, Maria, 96242 Sonnefeld (DE); KUFNER, Stefan, 96242 Sonnefeld (DE)
(74) Vertreter: FDST Patentanwälte
(86) Internationale Anmeldenummer: PCT/EP2014/062430
(87) Internationale Veröffentlichungsnummer: WO 2015/018550

(56) Entgegenhaltungen:
- JP-A- 2013 076 893
- US-A- 5 138 687
- US-A- 6 049 646
- US-A1- 2012 328 244

## Beschreibung

Die Erfindung betrifft einen optischen Koppler zur optischen Ankopplung einer Mehrkernfaser mit mehreren optischen Kernen an mehrere Einzelfasern mit den Merkmalen des Oberbegriffs des Anspruchs 1.

Ein derartiger optischer Koppler ist beispielsweise aus der US 2011/0176776 A1 und der US 6049646 A1 zu entnehmen.

In der optischen Signalübertragung werden neben den üblicherweise eingesetzten Einzelfasern auch Mehrkernfasern eingesetzt, bei denen mehrere optische, also Lichtwellen leitende Kerne gemeinsam in einer Faser integriert sind. Häufig besteht der Bedarf, derartige Mehrkernfasern mit Einzelfasern zu verbinden, also mit Fasern, die jeweils nur einen einzigen Lichtwellen leitenden Kern aufweisen.

Ein derartiger Koppler ist weiterhin beispielsweise aus der US 2013/0051729 A1 zu entnehmen. Der Koppler umfasst eine Trägerplatte, auf dem einzelne optische Wellenleiter angebracht sind, an die sich jeweils endseitig ein etwa prismatisches Spiegelelement anschließt. Die Spiegelelemente sind entsprechend einem Verteilungsmuster der Kerne der Mehrkernfaser auf der Trägerplatte angeordnet. Die Mehrkernfaser ist mit einer Stirnseite, also rechtwinklig zu der Trägerplatte mit dem Koppler verbunden. Die einzelnen Kerne der Mehrkernfaser fluchten mit den einzelnen Spiegeln, so dass die optischen Signale der einzelnen Kerne über die Spiegel unter einer 90°-Umlenkung jeweils in die auf die Trägerplatte aufgebrachten Wellenleiter eingeleitet werden.

Im Bereich der Wellenleitertechnologie ist die sogenannte planare optische Wellenleitertechnik bekannt, bei der Wellenleiter in die Oberfläche von planaren Trägern eingebracht sind. Auf der Basis der planaren Wellenleitertechnik lassen sich so optische Bauelemente, sogenannte optische Chips mit integrierter Funktionalität, beispielsweise Verteiler (Splitter) ausbilden. Derartige optische Bauelemente sind aus der WO 2011/057811 A2 sowie der WO 2011/057812 A2 zu entnehmen. Die optischen Bauelemente bestehen dabei aus einem planarem Trägerelement, vorzugsweise aus Glas, in das durch eine geeignete Bearbeitung Lichtwellenleiterbahnen integriert sind. Insbesondere wird dabei die Leiterbahn durch einen lonendiffusionsprozess erzeugt. Die Strukturierung eines Leiterbahnmusters erfolgt dabei vorzugsweise lithografisch in an sich bekannter Weise. Zum Anschluss von Fasern an einem derartigen optischen Bauteil werden mehrere Fasern parallel nebeneinander in einem Anschlussträger, vorzugsweise ebenfalls aus Glas, eingebettet, insbesondere in sogenannte V-Nuten, um eine exakte Ausrichtung und Positionierung der einzelnen Fasern zu gewährleisten. Der Anschlussträger wird dann an das optischen Bauelement in geeigneter Weise beispielsweiße durch Kleben oder ein sonstiges Bonding-Verfahren angekoppelt, so dass die Wellenleiter des Bauelements mit den Fasern des Anschlussträgers fluchten.

Grundsätzlich zeigt die planare Wellenleitertechnik eine hohe optische Güte, so dass diese Wellenleitertechnik grundsätzlich für optische Bauelemente mit hohen Qualitätsanforderungen geeignet ist. Aufgrund ihres grundlegenden Prinzips, nämlich der Strukturierung von Wellenleiterbahnen an der Oberfläche des Trägerelements sind die einzelnen Wellenleiter innerhalb einer Planebene angeordnet. Um eine Mehrkernfaser an ein derartiges optisches Bauelement gemäß der planaren Wellenleitertechnologie anzuschließen wäre eine 90°-Umlenkung wie in der US 2013/0051729 A1 beschrieben eine Anschlussmöglichkeit. Jedoch ist die damit verbundene 90°-Umlenkung von Nachteil.

In der US 2011/0176776 A1 ist ein optischer Koppler zum Anschluss einer Mehrkernfaser beschrieben. Der optische Koppler weist dabei in einer Ausführungsvariante mehrere parallel zueinander und schichtweise angeordnete planare Lichtweillenleiterelemente auf, an die jeweils eine Gruppe von Kernen der Mehrkernfaser angeschlossen ist. Die einzelnen Gruppen verlaufen dabei korrespondierend zu den Trägerelementen parallel zueinander. Um ein Rastermaß zwischen den einzelnen Kernen der Mehrkernfaser im Anschlussbereich zu vergrößern ist die Mehrkernfaser in ihrem Anschlussbereich aufgeweitet.

Aus der JP 2013-076893 A ist weiterhin ein optischer Koppler zu entnehmen, bei dem ein mehrschichtiges Lichtwellenleiterelement an einer Mehrkernfaser angeschlossen ist. Das durch die Mehrkernfaser gebildete optische Anschlussmuster der Kerne wird mit Hilfe des mehrschichtigen optischen Elements auf ein linienartiges Anschlussmuster für die einzelnen Kerne überführt. Voraussetzung hierbei ist, dass die einzelnen Kerne der Mehrkernfaser auf unterschiedlichen Höhen angeordnet ist. Jeder einzelne Kern wird über eine in einer jeweiligen Schicht verlaufenden Lichtwellenleiterstruktur auf das ausgangsseitig angeordnete Linienmuster geleitet.

Ausgehend hiervon liegt der Erfindung die Aufgabe zugrunde, einen optischen Koppler zur optischen Ankopplung einer Mehrkernfaser insbesondere mit Hilfe der planaren Wellenleitertechnologie anzugeben.

Die Aufgabe wird erfindungsgemäß gelöst durch einen optischen Koppler mit den Merkmalen des Anspruchs 1. Der optische Koppler umfasst hierbei einen Träger, in dem eine Mehrkernfaser mit mehreren optischen, sich in einer Längsrichtung erstreckenden Kernen eingebettet ist. Hierzu ist insbesondere vorgesehen, dass die Mehrkernfaser in eine V-Nut des Trägers eingelegt und darin vergossen ist. Die einzelnen Kerne münden an einer Stirnfläche des Trägers. Die Kerne lassen sich in mehrere Gruppen von Kernen unterteilen, wobei die einzelnen Gruppen der Kerne entlang von geraden Linien orientiert sind. Es sind daher zumindest zwei Gruppen an Kernen der Mehrkernfaser definiert, die entlang einer ersten Linie und entlang einer zweiten Linie orientiert sind. Der Koppler weist weiterhin ein erstes sowie ein zweites Koppelelement auf, an den eine erste sowie eine zweite Gruppe an Einzelfasern anschließbar ist oder angeschlossen ist. Die Koppelelemente umfassen dabei jeweils ein optisches nach Art der planaren Wellenleitertechnologie ausgebildetes Trägerelement mit darin eingebrachten Wellenleiter, wobei die Wellenleiter an einer stirnseitigen Anschlussseite wiederum entlang einer Linie verlaufen. Zur Verbindung der einzelnen Kerne der Mehrkernfaser mit den Wellenleitern der Trägerelemente ist nunmehr vorgesehen, dass mehrere Trägerelemente mit ihren Anschlussseiten gemeinsam an der Stirnseite des Trägers angeschlossen sind. Die Kerne der ersten Gruppe der Mehrkernfaser fluchten mit den Wellenleitern des ersten Trägerelements und die Kerne der zweiten Gruppe der Mehrkernfaser fluchten mit den Wellenleitern des zweiten Trägerelements. Optischen Signale aus einem jeweiligen Kern werden dadurch im Betrieb, in einen zugeordneten Wellenleiter des jeweiligen Trägerelements eingekoppelt.

Es werden also zumindest zwei Trägerelemente gemeinsam an der Stirnseite des Trägers angeschlossen, wobei jedes Trägerelement eine entlang einer Linie verlaufende Gruppe an Kernen anschließt. Auf diese Weise wird ein Anschluss einer Mehrkernfaser an Einzelfasern mit Hilfe der planaren Wellenleitertechnologie in einfacher Weise ermöglicht. Gemäß einer zweckdienlichen Ausgestaltung sind entsprechend auch die Wellenleiter in die Oberfläche des Trägerelements eingebracht, insbesondere mit Hilfe eines lonendiffusionsprozess und vorzugsweise lithografisch.

Grundsätzlich ist dabei eine exakte Ausrichtung der Mehrkernfaser bezüglich einer Bezugsebene von wesentlicher Bedeutung, da eine exakte Orientierung der Linien der Mehrkernfaser mit der jeweiligen Oberfläche der Trägerelemente gewährleistet sein muss. Entsprechend ist gemäß einer zweckdienlichen Ausgestaltung die Mehrkernfaser innerhalb des Trägers derart eingebettet, dass die einzelnen Kerne exakt zu einer Bezugsebene ausgerichtet sind. Die Bezugsebene wird dabei vorzugsweise durch eine Seitenfläche des Trägers gebildet. Die einzelnen Linien der Gruppen der Kerne sind nunmehr zweckdienlicher Weise parallel oder unter einem definierten Winkel hierzu orientiert.

Allgemein weist der Träger daher vorzugsweise eine planare Ausgestaltung mit rechteckförmiger Querschnittsfläche auf, wobei die einzelnen Linien parallel zu einer jeweiligen Seitenfläche des Trägers verlaufen. Durch diese Maßnahme ist eine möglichst exakte Orientierung des Trägers und der Mehrkernfaser zu den mehreren Trägerelementen ermöglicht.

Allgemein eignet sich dieses Anschlussprinzip für zwei oder mehr Gruppen an Kernen, die sich entlang einer Linie ausrichten lassen. In bevorzugter Ausgestaltung ist eine weitere Gruppe von Kernen definiert, die entlang einer weiteren Linie orientiert und über ein weiteres optisches Koppelelement an eine weitere Gruppe an Einzelfasern anschließbar ist.

Die Linien der einzelnen Gruppen der Kerne und korrespondierend hierzu die Trägerelemente sind unter einem Winkel, insbesondere rechtwinklig zueinander orientiert. Durch die winklige, insbesondere rechtwinklige Orientierung der einzelnen Trägerelemente zueinander wird der Anschluss an die Kerne in besonders geeigneter Weise ermöglicht.

Die einzelnen Trägerelemente liegen plan aneinander an, um ein von der Mehrkernfaser vorgegebenes Abstandsmaß und damit das Verteil- oder Anschlussmuster der Mehrkernfaser nachzubilden.

Entsprechend ist bei dem zweiten Trägerelement in zweckdienlicher Ausgestaltung daher ein Wellenleiter in einem Eckbereich angeordnet, wobei ein Randabstand des Wellenleiters zu der Seitenfläche des Trägerelements kleiner oder gleich einem Kernabstand zwischen der ersten Linie der Gruppen von Kernen zum nächstgelegenen Kern der zweiten Linie ist.

Um beim Übergang vom Träger in das Trägerelement Reflektionen möglichst zu vermeiden sind die Stirnseite des Trägers sowie korrespondierend hierzu die Anschlussseiten der Trägerelemente abgeschrägt. Die gesamte Anschlussseite des jeweiligen Trägerelements sowie vorzugsweise die gesamte Stirnseite sind daher bezüglich der Oberflächen des Trägers beziehungsweise des jeweiligen Trägerelements insgesamt schräg orientiert. Die Schräge ist bezüglich einer senkrechten Orientierung zu der Oberfläche unter einem Neigungswinkel von vorzugsweise etwa 7 bis 11 Grad orientiert.

Um einen möglichst guten optischen Übergang sicherzustellen ist die Stirnseite des Trägers mit der eingebetteten Mehrkernfaser poliert, so dass also die einzelnen Kerne in einer definierten, durch die Stirnseite gebildeten Planebene liegen. Um die Mehrkernfaser an standardisierte optische Bauelemente wie optische Stecker etc. anschließen zu können, divergieren in zweckdienlicher Weiterbildung die Wellenleiter der Trägerelemente von der Anschlussseite zu einer Koppelseite hin, an der die Einzelfasern angeschlossen oder anschließbar sind. Das Abstandsmaß der einzelnen Kerne in der Mehrkernfaser, welches beispielsweise bei lediglich 30 µm liegt, wird daher auf ein gewünschtes Raster- und Abstandsmaß aufgeweitet, beispielsweise in der Größenordnung von 127 µm, 250 µm oder einem Vielfachen hiervon.

In zweckdienlicher Weiterbildung schließt sich an das Trägerelement weiterhin ein Anschlussträger an, in dem die jeweilige Gruppe an Einzelfasern insbesondere in V-Nuten eingebettet ist. Das Koppelelement umfasst daher neben dem Trägerelement auch noch den Anschlussträger, der mit dem Trägerelement in geeigneter Weise optisch gekoppelt insbesondere verklebt ist. Die einzelnen Fasern fluchten mit einem jeweiligen Wellenleiter des Trägerelements an der Koppelseite. Der Anschlussträger weist hierzu ebenfalls wiederum eine zugeordnete, insbesondere polierte Anschlussseite auf.

An dem Anschlussträger gegenüberliegenden Ende sind die Einzelfasern in zweckdienlicher Weiterbildung an einen optischen Steckverbinder angeschlossen, über den dann über übliche optische Standard-Verbinder weitere optische Fasern angeschlossen werden können. Die im Anschlussträger eingebetteten Einzelfasern sind entsprechend auch vergleichsweise kurz und erstrecken sich beispielsweise nur über wenige Zentimeter, um die Ankopplung eines oder mehrerer optischer Verbinder an das Koppelelement zu ermöglichen.

Ausführungsbeispiele der Erfindung werden nachfolgend anhand der Figuren näher erläutert. Diese zeigen jeweils in teilweise stark vereinfachten Darstellungen:
- FIG 1: Eine Anordnung mit einem optischen Koppler zur Verbindung einer Mehrkernfaser mit mehreren Einzelfasern in einer Seitenansicht,
- FIG 2: eine Ansicht in Blickrichtung A-A gemäß Figur 1 auf zwei optische Koppelelemente, die an einem die Mehrkernfaser aufweisenden Träger angeschlossen sind
- FIG 3A: eine Aufsicht auf ein erstes Koppelelement, welches an den Träger gemäß Figur 2 angeschlossen ist,
- FIG 3B: eine Aufsicht auf ein zweites Koppelelement, welches an den Träger gemäß Figur 2 angeschlossen ist,
- FIG 4A: das erste Koppelelement gemäß Figur 3A in einer Seitenansicht,
- FIG 4B: das zweite Koppelelement gemäß Figur 3B in Seitenansicht,
- FIG 5: den Träger gemäß Figur 2 mit darin eingebetteter Mehrkernfaser in Seitenansicht,
- FIG 6: eine zu Figur 2 vergleichbare Ansicht, jedoch mit insgesamt drei an einem Träger angeschlossenen Trägerelementen sowie
- FIG 7A bis 7C: Aufsichten auf die an dem Träger gemäß Figur 7 angeschlossenen Koppelelemente

In den Figuren sind gleichwirkende Teile mit den gleichen Bezugszeichen versehen.

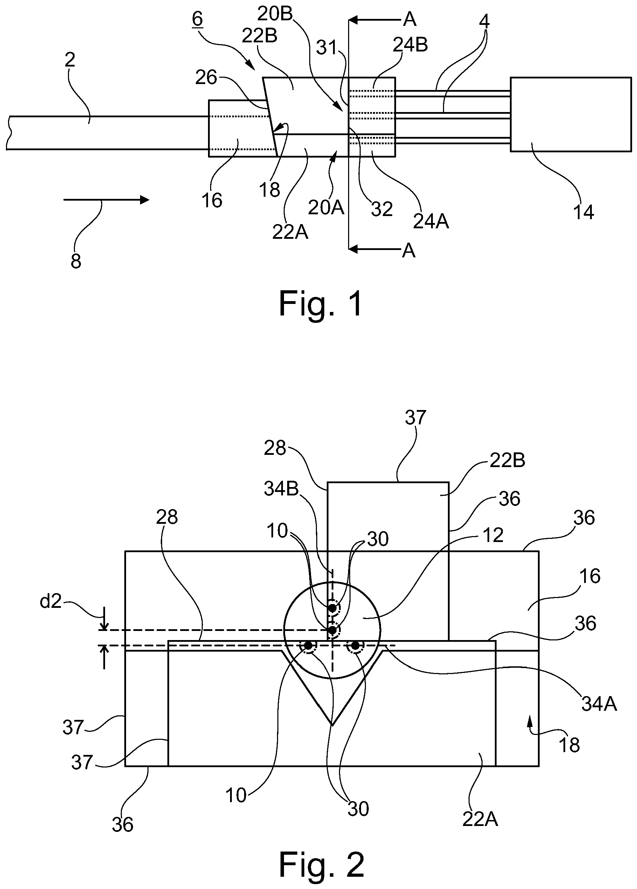

Zum Anschluss einer optischen Mehrkernfaser 2 an mehrere Einzelfasern 4 ist ein optischer Koppler 6 ausgebildet, wie er vereinfacht und allgemein in Figur 1 in einer Seitenansicht dargestellt ist. Weitere Details sind den weiteren Figuren zu entnehmen.

Die Mehrkernfaser 2 erstreckt sich in einer Längsrichtung 8. Der optische Koppler 6, sowie die abgehenden Einzelfasern 4 schließen sich in Längsrichtung 8 an die Mehrkernfaser 2 an.

Die optische Mehrkernfaser 2 weist mehrere optische Kerne 10 auf, die in einem Fasermantel 12 eingebettet sind (vergleiche hierzu beispielsweise FIG 2). Die Einzelfasern 4 weisen demgegen, über jeweils einzelweise in einem Fasermantel eingebettete optische Kerne auf (nicht dargestellt).

In Figur 1 ist ergänzend endseitig an den Einzelfasern 4 noch ein optischer Steckverbinder 14 angeschlossen, über den weitere Einzelfasern über eine Standard-Steckverbindung angeschlossen werden können. Entsprechend ist vorzugsweise auch die Mehrkernfaser 2 an einem optischen hier nicht näher dargestellten Steckverbinder angeschlossen. Die gesamte Anordnung bildet in diesem Fall eine vorgefertigte Adapter-Baueinheit um von einem Mehrkernfaser-System auf ein Einzelfaser-System über Standardsteckverbinder zu wechseln.

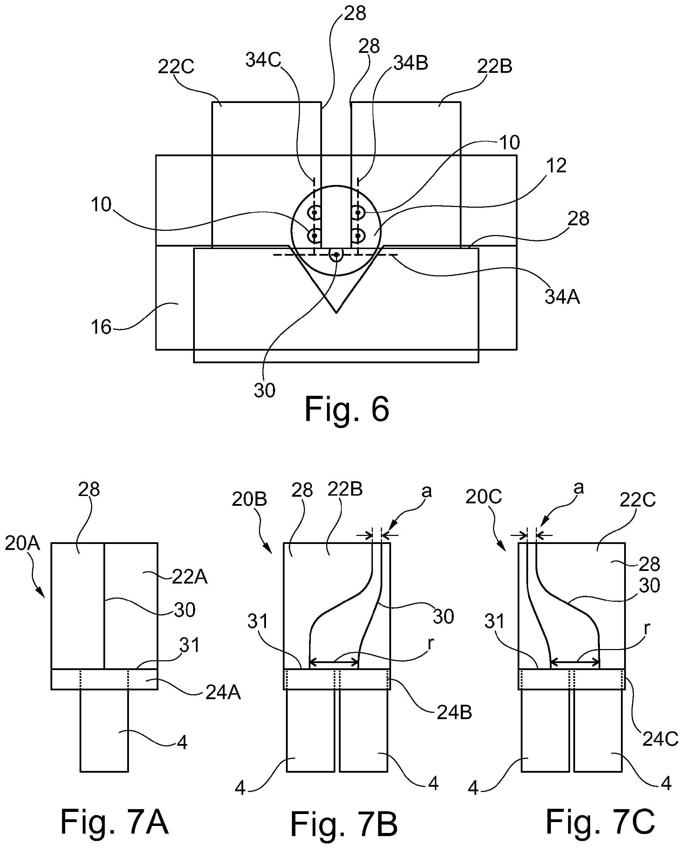

Der optische Koppler 6 umfasst einen Träger 16, in dem die Mehrkernfaser 2 eingebettet ist. An einer abgeschrägten Stirnfläche 18 des Trägers 16 sind mehrere Koppelelemente angeschlossen. Im Ausführungsbeispiel der Figur 2 ist an den Träger 16 ein erstes Koppelelement 20A sowie ein zweites Koppelelement 20B und im Falle der Ausführungsvariante gemäß der Figur 6 noch ein zusätzliches drittes Koppelelement 20C angeschlossen.

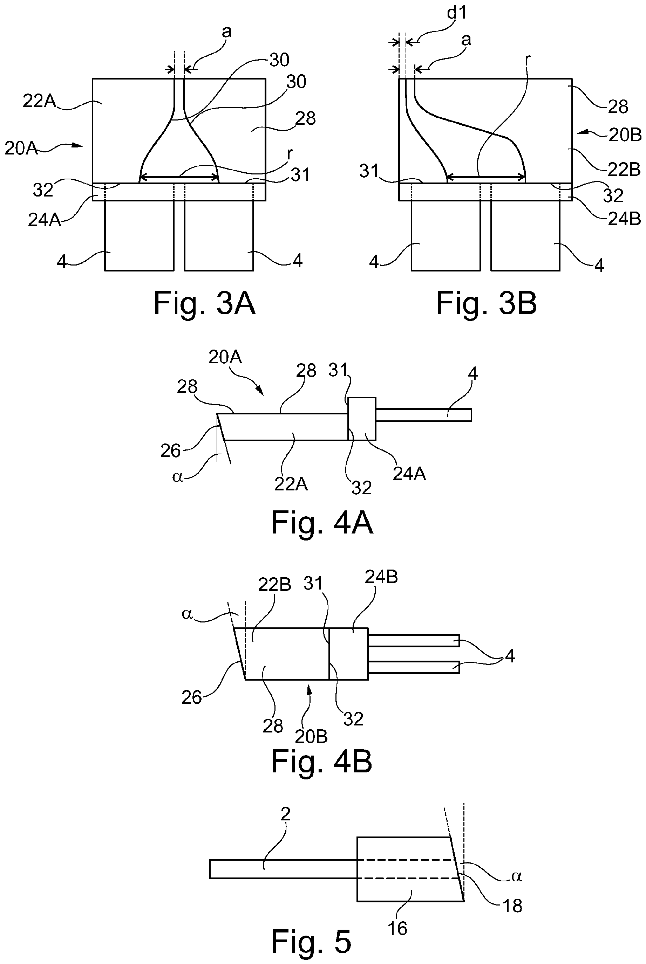

Ein jeweiliges Koppelelement 20A, B, C ist in den Ausführungsbeispielen dabei gebildet aus einem Trägerelement 22A, B, C und einem sich daran anschließenden Anschlussträger 24A, B, C. Die Trägerelemente 22A, B, C sind jeweils als optische Bauelemente gemäß der planaren Wellenleitertechnologie ausgebildet und werden auch als sogenannte optische Chips bezeichnet. Die Trägerelemente 22A, B, C liegen jeweils mit einer stirnseitigen Anschlussseite 26 an der Stirnfläche 18 des Trägers 16 an. Die Trägerelemente 22A, B, C bestehen aus einem geeigneten optischen Trägermaterial wie beispielsweise Glas oder Kunststoff und sind üblicherweise im Querschnitt rechtechtförmig ausgebildet. Sie weisen jeweils eine Oberfläche 28 auf, in die jeweils zumindest ein Wellenleiter 30 (vgl. hierzu insbesondere Figuren 3A, 3B, sowie Figuren 7A bis 7C) eingebracht sind. Ein jeweiliger Wellenleiter 30 fluchtet dabei exakt mit einem jeweiligen Kern 10 der Mehrkernfaser 2. Rückseitig am jeweiligen Trägerelement (26A, B, C) ist der jeweilige Anschlussträger 24A, B, C angekoppelt, in den - ähnlich wie beim Träger 16 - die Einzelfasern 4 eingebettet sind. Diese enden ebenfalls an einer polierten weiteren Stirnfläche 31, mit der sie an eine Koppelseite 32 des jeweiligen Trägerelements 22A, B, C angekoppelt sind. Die einzelnen Kerne 10 der Einzelfasern 4 fluchten dabei wiederum exakt mit den Wellenleitern 30 an der Koppelseite 32. Wie insbesondere aus Figur 1 zu entnehmen ist, schließen sich die einzelnen Elemente in Längsrichtung 8 aneinander an, die einzelnen Übergänge zwischen den Kernen 10 der Mehrkernfaser 2 hin zu den Wellenleitern 30 der Trägerelemente 22A, B, C fluchten daher in Längsrichtung 8. Gleiches gilt für die nachfolgenden Übergänge zwischen den Wellenleitern 30 und den Kernen der Einzelfasern 4.

Aufgrund der Verwendung der planaren Wellenleitertechnologie stehen bei den Trägerelementen 22A, B, C Wellenleiter 30 lediglich an der Oberfläche 28 zur Verfügung. Dies ist bedingt durch das spezielle Herstellungsverfahren, bei dem die Wellenleiter 30 in das Trägersubstrat des Trägerelements 22A, B, C insbesondere durch einen Ionendiffusionsprozess eingebracht werden. Zur Strukturierung des Wellenleiter-Musters wird dabei vorzugsweise auf ein Lithografieverfahren zurückgegriffen. Die Wellenleiter 30 sind daher unmittelbar an der Oberfläche 28 ausgebildet.

Die Kerne 10 der Mehrkernfaser 2 sind dem gegenüber jedoch in einer Ebene senkrecht zur Längsrichtung 8 verteilt angeordnet, wie dies anhand der Figuren 2 und 7 zu erkennen ist. Die Trägerelemente 22A, B, C mit ihren in ihren Oberflächen 28 eingebrachten Wellenleitern 30 sind allgemein derart angeordnet, dass die einzelnen Kerne 10 exakt mit den Wellenleitern 30 an der Oberfläche 28 fluchten und zwar derart, dass sämtliche Kerne 10 durch geeignete Gruppierungen der Kerne entlang von Linien 34A, B, C ausgerichtet sind, welche planparallel zu einer jeweiligen Oberfläche 28 der Trägerelemente 22A, B, C fluchten.

Im Ausführungsbeispiel der Figur 2 sind die insgesamt vier Kerne 10 entlang einer ersten Linie 34A sowie einer senkrecht hierzu orientierten zweiten Linie 34B orientiert. Da eine exakte Ausrichtung zu den Wellenleitern 30 erfolgen muss, ist bereits die Mehrkernfaser 2 innerhalb des Trägers 16 definiert ausgerichtet. Der Träger 16 weist ebenso wie die Trägerelemente 22A, B, C eine rechteckförmige Querschnittsfläche mit gegenüberliegenden Grundseiten 36 sowie mit gegenüberliegenden Seitenflächen 37 auf. Bei den Trägerelementen 22A, B, C bildet die Oberfläche 28 eine der Grundseiten 36.

Die erste Linie 34A verläuft nunmehr vorzugsweise parallel zu den Grundseiten 36 und die zweite Linie 34B senkrecht hierzu. Der Träger 16 weist vorzugsweise zwei Trägerhälften 16A, 16B auf, wobei die untere Trägerhälfte 16A im Ausgangszustand eine V-Kerbe 38 aufweist, in die die Mehrkernfaser 2 eingelegt wird. Beim Fixieren der Mehrkernfaser 2 an dieser unteren Trägerhälfte 16A wird bereits eine Justierung und Ausrichtung der Mehrkernfaser 2 vorgenommen. Befindet sich die Mehrkernfaser 2 in der gewünschten Orientierung, wird die Mehrkernfaser 2 fixiert und eingebettet, so dass der Träger 16 ausgebildet wird, welcher die Mehrkernfaser 2 in seinem Inneren vollumfänglich einschließt. Im letzten Schritt erfolgt noch die Ausbildung der abgeschrägten Stirnfläche 18, insbesondere durch Polieren. Diese ist bezüglich einer senkrecht zur Längsrichtung 8 orientierten Vertikalebene um einen Neigungswinkel α etwa im Bereich zwischen 7 und 11 Grad und vorzugsweise im Bereich von etwa 8 Grad geneigt (vergleiche hierzu die Figuren 4A, 4B sowie 5). Wie anhand der Figuren 4A, 4B zu erkennen ist, wird dieser Neigungswinkel α identisch auch bei den Trägerelementen 22A, B vorzugsweise ebenfalls durch einen Poliervorgang ausgebildet. Durch diese Anschrägung werden störende Reflexionen zumindest reduziert.

In gleicher Weise wie der Träger 16 ist vorzugsweise auch der jeweilige Anschlussträger 24A, B, C mit den eingebetteten Einzelfasern 4 ausgebildet. Auch hier weist der jeweilige Anschlussträger 24A, B, C eine untere Trägerhälfte auf, welche mit einer V-Nut versehen ist, in die die jeweilige Einzelfaser 4 an einer definierten Position einliegt. Die Einzelfasern 4 sind ebenfalls komplett im Volumen des jeweiligen Anschlussträgers 24A, B, C eingebettet.

Zur exakten Ausrichtung der einzelnen Trägerelemente 22A, B, C an den jeweiligen Träger 16 wird in die einzelnen optischen Signalpfade vorzugsweise ein optisches Signal eingespeist, wobei die Ausrichtung des jeweiligen Trägerelements 22A, B, C bezüglich des Trägers 16 solange erfolgt, bis die Signalstärke maximal ist. Sobald diese exakte ausgerichtete Position erreicht ist, wird das Trägerelement 22A, B, C an dieser Position insbesondere mit Hilfe eines Klebers am Träger 16 befestigt.

Wie insbesondere aus den Figuren 2 und 7 zu entnehmen ist, sind die Trägerelemente 22A, B, C entsprechend der Ausrichtung der Linien 34A, B, C der einzelnen Gruppen der Kerne 10 winklig, insbesondere rechtwinklig zueinander orientiert. Die einzelnen Oberflächen 28 sind daher entsprechend der Orientierung der Linien 34A, B, C senkrecht zueinander orientiert. Die winklig zueinander ausgerichteten Trägerelemente 22A, B, C liegen dabei mit ihren Planseiten aneinander an.

Bei der Ausführungsvariante der Figur 7 sind zwei parallel zueinander orientierte Linien 34B, C ausgebildet, die jeweils eine Gruppe an Kernen umfassen. Die parallel zueinander orientierten Trägerelemente 22B, 22C sind voneinander beabstandet, wobei der Abstand etwas kleiner ist als der Abstand zwischen den parallelen Linien 34 B, C.

Die einzelnen Kerne 10 sind in der Mehrkernfaser 2 um ein Abstandsmaß a voneinander beabstandet, welches beispielsweise im Bereich von 30 µm liegt. Der gesamte Durchmesser einer derartigen Mehrkernfaser liegt beispielsweise bei 125 µm.

Dieses vergleichsweise geringe Abstandsmaß a der einzelnen Kerne 10 wird mittels des jeweiligen Trägerelements 22A, B, C und der darauf angebrachten Wellenleiterstruktur auf ein definiertes Rastermaß r an der Koppelseite 26 aufgeweitet. Dieses Rastermaß r liegt beispielsweise bei 127 µm, 250 µm oder einem Vielfachen hiervon. Die Wellenleiter 30 divergieren daher ausgehend von der Anschlussseite 26 hin zur Koppelseite 32. An der Koppelseite 32 enden die jeweiligen Wellenleiter 30 vorzugsweise symmetrisch und bezüglich einer Mittenlängsachse ausgerichtet.

Umgekehrt beginnen die Wellenleiter 30 an der Anschlussseite 26 insbesondere bei den vertikalorientierten Trägerelementen 22B, C asymmetrisch in einem Eckbereich. Ein Randabstand d1 (vgl. FIG 3B) des äußersten Wellenleiters 30 zu der Seitenfläche 37, mit der das jeweilige Trägerelement 22B, C auf dem horizontalverlaufenden Trägerelements 22A aufliegt, ist daher sehr gering und liegt beispielsweise lediglich im Bereich zwischen 5 und 25 µm, vorzugsweise lediglich im Bereich von 10 µm. Dieser Randabstand d1 ist damit geringer als ein Kernabstand d2 zwischen der ersten Linie 34A und dem nächstliegenden Kern der zweiten oder dritten Linie 34B, C (vgl. FIG 2).

Durch die hier beschriebene spezielle Ausgestaltung des optischen Kopplers 6 ist daher eine Anschlussmöglichkeit zum Anschluss einer Mehrkernfaser 2 an Einzelfasern 4 unter Zuhilfenahme der planaren Wellenleitertechnologie geschaffen. Voraussetzung hierfür ist, dass die Kerne 10 der Mehrkernfaser 2 sich derart gruppieren lassen, dass die Kerne 10 einer jeden Gruppe exakt entlang einer vorgegebenen Linie 34A, B, C verlaufen. Dabei steht nur eine begrenzte Anzahl von derartigen Gruppen zur Verfügung, da jeder Gruppe ein eigenes Trägerelement 22A, B, C zugeordnet ist. Die Anzahl der Gruppen und damit der Linien 34A, B, C ist daher allgemein beschränkt, insbesondere können maximal drei Gruppen ausgebildet sein, um die Handhabung der Trägerelemente 22A, B, C zu ermöglichen.

### Bezugszeichenliste

- 2: optische Mehrkernfaser
- 4: Einzelfaser
- 6: optischer Koppler
- 8: Längsrichtung
- 10: optischer Kern
- 12: Fasermantel
- 14: optischer Steckverbinder
- 16: Träger
- 16A, B: Trägerhälften
- 18: Stirnfläche
- 20A: erstes Koppelelement
- 20B: zweites Koppelelement
- 20C: drittes Koppelelement
- 22A: erstes Trägerelement
- 22B: zweites Trägerelement
- 22C: drittes Trägerelement
- 24A: erster Anschlussträger
- 24B: zweiter Anschlussträger
- 24C: dritter Anschlussträger
- 26: Anschlussseite!!
- 28: Oberfläche
- 30: Wellenleiter
- 31: weitere Stirnfläche
- 32: Koppelseite
- 34A: erste Linie
- 34B: zweite Linie
- 34C: dritte Linie
- 36: Grundseite
- 37: Seitenfläche
- 38: V-Kerbe
- α: Neigungswinkel

## Patentansprüche

1. Optischer Koppler (6) zur optischen Ankopplung einer Mehrkernfaser (2) mit mehreren optischen Kernen (10) an mehreren Einzelfasern (4), wobei sich die Mehrkernfaser (2) entlang einer Längsrichtung (8) erstreckt und die optischen Kerne (10) in einer Ebene senkrecht zur Längsrichtung (8) verteilt angeordnet sind, der aufweist
- einen Träger (16), in dem die Mehrkernfaser (2) in definierter Ausrichtung eingebettet ist und innerhalb der Ebene eine erste Gruppe der Kerne (10) entlang einer ersten Linie (34A) und eine zweite Gruppe der Kerne entlang einer zweiten Linie (34B) orientiert ist,
- ein planes erstes Trägerelement (22A), an dem eine erste Gruppe der Einzelfasern (4) anschließbar ist,
- ein zweites planes Trägerelement (22B), an dem eine zweite Gruppe der Einzelfasern (4) anschließbar ist
- wobei in die Trägerelemente (22A, B, C) Wellenleiter (30) eingebracht sind,
- wobei das jeweilige Trägerelement (22A, B, C) mit einer Anschlussseite (26) an einer Stirnfläche (18) des Trägers (16) angeschlossen ist, so dass die Kerne (10) der ersten Gruppe der Mehrkernfaser (2) mit den Wellenleitern (30) des ersten Trägerelements (22A) und die Kerne (10) der zweiten Gruppe mit den Wellenleitern (30) des zweiten Trägerelements (22B) fluchten, **dadurch gekennzeichnet, dass** die Linien (34A, B, C) der einzelnen Gruppen der Kerne (10) und korrespondierend hierzu die Trägerelemente (22A, B, C) winklig zueinander angeordnet sind.

2. Optischer Koppler (6) nach Anspruch 1, **dadurch gekennzeichnet, dass** die Wellenleiter (30) in eine Oberfläche (28) des jeweiligen Trägerelements (22A, B, C) eingebracht sind.

3. Optischer Koppler (6) nach Anspruch 1 oder 2 , **dadurch gekennzeichnet, dass** der Träger (16) planar mit einer rechteckförmigen Querschnittsfläche ausgebildet ist und die Linien (34A, B, C) parallel zu einer Seite (36, 37) des Trägers (16) verlaufen,

4. Optischer Koppler (6) nach einem der vorhergehenden Ansprüche, **dadurch gekennzeichnet, dass** die Mehrkernfaser (2) zumindest eine weitere Gruppe von Kernen (10) aufweist, die entlang zumindest einer weiteren Linie (34C) orientiert sind und die über ein weiteres optisches Trägerelement (22C) an eine weitere Gruppe an Einzelfasern (4) anschließbar ist.

5. Optischer Koppler (6) nach einem der vorhergehenden Ansprüche, **dadurch gekennzeichnet, dass** die Linien (34A, B, C) senkrecht zueinander orientiert sind.

6. Optischer Koppler (6) nach einem der vorhergehenden Ansprüche, **dadurch gekennzeichnet, dass** bei dem zweiten Trägerelement (22B) ein Wellenleiter (30) in einem Eckbereich angeordnet ist und ein Randabstand (d1) des Wellenleiters (30) zu einer Seitenfläche (37) des zweiten Trägerelements (22B) kleiner gleich einem Kernabstand (d2) der ersten Linie (34A) zu dem nächstgelegenen Kern (10) der zweiten Linie (34B) ist.

7. Optischer Koppler (6) nach einem der vorhergehenden Ansprüche, **dadurch gekennzeichnet, dass** die Anschlusseiten (26) sowie die Stirnseite (18) korrespondierend zueinander abgeschrägt sind.

8. Optischer Koppler (6) nach einem der vorhergehenden Ansprüche, **dadurch gekennzeichnet, dass** die Stirnseite (18) poliert ist.

9. Optischer Koppler (6) nach einem der vorhergehenden Ansprüche, **dadurch gekennzeichnet, dass** die Wellenleiter (30) der Trägerelemente (22A, B, C) von der Anschlussseite (26) zu einer gegenüberliegenden Koppelseite (32) divergieren, so dass ein Abstandsmaß (a) der Kerne (10) in der Mehrkernfaser (2) auf ein Rastermaß (r) vergrößert ist.

10. Optischer Koppler (6) nach einem der vorhergehenden Ansprüche, **dadurch gekennzeichnet, dass** die jeweilige Gruppe an Einzelfasern (4) in einem Anschlussträger (24A, B, C) eingebettet sind, welche an dem jeweiligen Trägerelement (22A, B, C) angeschlossen ist.

11. Optischer Koppler (6) nach einem der vorhergehenden Ansprüche, **dadurch gekennzeichnet, dass** an den Einzelfasern (4) endseitig ein optischer Verbinder (14) angeordnet ist.

## Claims

1. Optical coupler (6) for optically coupling a multicore fiber (2) having a plurality of optical cores (10) to a plurality of individual fibers (4), wherein the multicore fiber (2) extends along a longitudinal direction (8) and the optical cores (10) are disposed in a distributed manner in a plane perpendicular to the longitudinal direction (8), which optical coupler has
- a support (16), in which the multicore fiber (2) is embedded in a defined alignment and within the plane a first group of the cores (10) is oriented along a first line (34A) and a second group of the cores is oriented along a second line (34B),
- a planar first support element (22A), to which a first group of the individual fibers (4) can be connected,
- a second planar support element (22B), to which a second group of the individual fibers (4) can be connected,
- wherein waveguides (30) are inserted in the support elements (22A, B, C),
- wherein the respective support element (22A,A B, C) is connected, by a connection side (26), to an end face (18) of the support (16), such that the cores (10) of the first group of the multicore fiber (2) are in alignment with the waveguides (30) of the first support element (22A), and the cores (10) of the second group are in alignment with the waveguides (30) of the second support element (22B), **characterized in that** the lines (34A, B, C) of the individual groups of the cores (10) and, corresponding thereto, the support elements (22A, B, C), are disposed at an angle in relation to each other.

2. Optical coupler (6) according to Claim 1, **characterized in that** the waveguides (30) are inserted in a surface (28) of the respective support element (22A, B, C).

3. Optical coupler (6) according to Claim 1 or 2, **characterized in that** the support (16) is of a planar design, having a rectangular cross-sectional face, and the lines (34A, B, C) are parallel to a side (36, 37) of the support (16).

4. Optical coupler (6) according to any one of the preceding claims, **characterized in that** the multicore fiber (2) has at least one further group of cores (10), which are oriented along at least one further line (34C), and which can be connected to a further group of individual fibers (4) via a further optical support element (22C).

5. Optical coupler (6) according to any one of the preceding claims, **characterized in that** the lines (34A, B, C) are oriented perpendicularly in relation to each other.

6. Optical coupler (6) according to any one of the preceding claims, **characterized in that**, in the case of the second support element (22B), a waveguide (30) is disposed in a corner region and an edge distance (d1) of the waveguide (30) from a lateral face (37) of the second support element (22B) is less than or equal to a core distance (d2) of the first line (34A) from the nearest core (10) of the second line (34B).

7. Optical coupler (6) according to any one of the preceding claims, **characterized in that** the connection sides (26) and the end face (18) are beveled so as to correspond to each other.

8. Optical coupler (6) according to any one of the preceding claims, **characterized in that** the end face (18) is polished.

9. Optical coupler (6) according to any one of the preceding claims, **characterized in that** the waveguides (30) of the support elements (22A, B, C) diverge from the connection side (26) to an opposite coupling side (32), such that a distance dimension (a) of the cores (10) in the multicore fiber (2) is increased to a grid dimension (r).

10. Optical coupler (6) according to any one of the preceding claims, **characterized in that** the respective group of individual fibers (4) are embedded in a connection support (24A, B, C) that is connected to the respective support element (22A, B, C).

11. Optical coupler (6) according to any one of the preceding claims, **characterized in that** an optical connector (14) is disposed at the end of the individual fibers (4).

## Revendications

1. Coupleur optique (6) destiné à l'accouplement optique d'une fibre multicoeur (2) comprenant plusieurs coeurs optiques (10) à plusieurs fibres individuelles (4), la fibre multicoeur (2) s'étendant le long d'une direction longitudinale (8) et les coeurs optiques (10) étant disposés distribués dans un plan perpendiculaire à la direction longitudinale (8), lequel possède
- un dispositif porteur (16), dans lequel la fibre multicoeur (2) est enrobée dans une orientation définie et, à l'intérieur du plan, un premier groupe des coeurs (10) est orienté le long d'une première ligne (34A) et un deuxième groupe des coeurs est orienté le long d'une deuxième ligne (34B),
- un premier élément porteur (22A) plan auquel peut être raccordé un premier groupe de fibres individuelles (4),
- un deuxième élément porteur (22B) plan auquel peut être raccordé un deuxième groupe de fibres individuelles (4),
- des guides d'ondes (30) étant incorporés dans les éléments porteurs (22A, B, C),
- l'élément porteur (22A, B, C) respectif étant raccordé par un côté de raccordement (26) à une face frontale (18) du dispositif porteur (16), de sorte que les coeurs (10) du premier groupe de la fibre multicoeur (2) sont alignés avec les guides d'ondes (30) du premier élément porteur (22A) et les coeurs (10) du deuxième groupe avec les guides d'ondes (30) du deuxième élément porteur (22B), **caractérisé en ce que** les lignes (34A, B, C) des groupes individuels de coeurs (10) et, en correspondance à ceux-ci, les éléments porteurs (22A, B, C) sont disposés selon un certain angle les uns par rapport aux autres.

2. Coupleur optique (6) selon la revendication 1, **caractérisé en ce que** les guides d'ondes (30) sont incorporés dans une surface (28) de l'élément porteur (22A, B, C) respectif.

3. Coupleur optique (6) selon la revendication 1 ou 2, **caractérisé en ce que** le dispositif porteur (16) est de configuration plane avec une section transversale de forme rectangulaire et les lignes (34A, B, C) s'étendent parallèlement à un côté (36, 37) du dispositif porteur (16).

4. Coupleur optique (6) selon l'une des revendications précédentes, **caractérisé en ce que** la fibre multicoeur (2) possède au moins un groupe supplémentaire de coeurs (10), qui sont orientés le long d'au moins une ligne supplémentaire (34C) et qui peuvent être raccordés à un groupe supplémentaire de fibres individuelles (4) par le biais d'un élément porteur (22C) optique supplémentaire.

5. Coupleur optique (6) selon l'une des revendications précédentes, **caractérisé en ce que** les lignes (34A, B, C) sont orientées perpendiculairement les unes par rapport aux autres.

6. Coupleur optique (6) selon l'une des revendications précédentes, **caractérisé en ce qu'**un guide d'ondes (30) est disposé dans une zone de coin au niveau du deuxième élément porteur (22B), et un écart au bord (d1) entre le guide d'ondes (30) et une surface latérale (37) du deuxième élément porteur (22B) est inférieur ou égal à un écart au bord (d2) entre la première ligne (34A) et le coeur (10) le plus proche de la deuxième ligne (34B).

7. Coupleur optique (6) selon l'une des revendications précédentes, **caractérisé en ce que** les côtés de raccordement (26) ainsi que le côté frontal (18) sont biseautés en correspondance mutuelle.

8. Coupleur optique (6) selon l'une des revendications précédentes, **caractérisé en ce que** le côté frontal (18) est poli.

9. Coupleur optique (6) selon l'une des revendications précédentes, **caractérisé en ce que** les guides d'ondes (30) des éléments porteurs (22A, B, C) divergent depuis le côté de raccordement (26) vers un côté de couplage (32) situé à l'opposé, de sorte qu'une cote d'écart (a) entre les coeurs (10) dans la fibre multicoeur (2) est agrandie à une cote de grille (r).

10. Coupleur optique (6) selon l'une des revendications précédentes, **caractérisé en ce que** le groupe respectif de fibres individuelles (4) sont enrobées dans un dispositif porteur de raccordement (24A, B, C) qui est raccordé à l'élément porteur (22A, B, C) respectif.

11. Coupleur optique (6) selon l'une des revendications précédentes, **caractérisé en ce qu'**un connecteur optique (14) est disposé du côté de l'extrémité au niveau des fibres individuelles (4).
